# FASCICULE DE BREVET EUROPEEN

(11) **EP 2 145 570 B1**
(45) Date de publication et mention de la délivrance du brevet: **20.02.2013**
(21) Numéro de dépôt: 09290485.3
(22) Date de dépôt: 24.06.2009
(51) Int. Cl.: A47J 27/21

(54) **Appareil de préparation d'eau chaude comportant un dispositif de maintien au chaud**
Apparat zur Warmwasserzubereitung, der mit einer Warmhaltevorrichtung ausgestattet ist
Device for the preparation of hot water incorporating a device for keeping it hot

(30) Priorité: 16.07.2008 FR 0854836
(43) Date de publication de la demande: 20.01.2010
(73) Titulaire: Seb S.A., 69130 Ecully (FR)
(72) Inventeur: Lancon, Franck, 14790 Mouen (FR); Samson, Christian, 14980 Rots (FR)
(74) Mandataire: Kiehl, Hubert

(56) Documents cités:
- EP-A- 1 518 483
- JP-A- 6 141 974

## Description

La présente invention se rapporte à un appareil de préparation d'eau chaude et notamment à une bouilloire électrique. Plus particulièrement, elle se rapporte à un appareil comprenant :
- un boîtier définissant un récipient destiné à contenir de l'eau à chauffer à une température maximale prédéterminée ;
- un dispositif de chauffage électrique principal adapté pour chauffer l'eau à la température maximale prédéterminée ;
- un dispositif de chauffage électrique secondaire de puissance inférieure au dispositif de chauffage principal ;
- un détecteur de température apte à délivrer un signal lorsque l'eau atteint sensiblement la température maximale prédéterminée ; et
- un système de commande apte à commander une fonction de chauffage jusqu'à la température maximale prédéterminée, puis une fonction de maintien au chaud pendant au moins une durée prédéterminée à l'aide du dispositif de chauffage secondaire et au cours de laquelle l'eau est maintenue proche d'une température de maintien prédéterminée.

Le fait de maintenir à une température relativement élevée l'eau contenue dans un appareil de type bouilloire électrique s'avère pratique et demandé par les utilisateurs. En effet, pendant la période de maintien au chaud, l'utilisateur peut se servir une tasse sans avoir à commander et attendre un nouveau chauffage de l'eau jusqu'à la température maximale prédéterminée, et ce d'autant plus que la température de maintien au chaud moins élevée que la température maximale, permet de boire rapidement la boisson préparée. La plupart des appareils de ce type sont conçus pour porter l'eau à ébullition. Ceci permet notamment d'utiliser des détecteurs de la température particulièrement fiables et simples en exposant ceux-ci à la production de vapeur particulièrement importante au moment où le point d'ébullition est atteint. Le fait d'atteindre le point d'ébullition a aussi des avantages sur le plan sanitaire et sur la rapidité de l'opération de chauffage grâce à la possibilité d'utiliser des résistances de forte puissance.

Toutefois, s'il est relativement facile de déclencher l'arrêt du chauffage à une température correspondant au point d'ébullition avec un détecteur à action mécanique de type bilame exposé à la vapeur produite, et ce même avec des variations de pression atmosphérique, il s'avère relativement plus complexe de réguler la température de l'eau autour d'une valeur inférieure correspondant à la température de maintien au chaud prédéterminée. En effet, ce genre d'appareil appartenant généralement à la catégorie des petits appareils électroménagers doit être particulièrement simple pour rester à un prix acceptable par les consommateurs, tout en présentant une grande fiabilité de fonctionnement.

Dans ce but, il est par exemple connu du document JP06-141974 A de réaliser la fonction de maintien au chaud avec un seul capteur de température, ici placé au centre du fond chauffant. Après une première ébullition détectée par le capteur de température, la résistance principale est arrêtée et l'eau refroidie. Arrivée à la température minimale choisie à 80°C et mesurée par ce capteur, une résistance secondaire est alimentée. Le fait de mesurer des températures, en particulier la température d'ébullition à l'aide d'un capteur fournissant un signal électrique dépendant de la température mesurée, exige toutefois une grande précision et une grande constance des caractéristiques des composants utilisés. Il peut poser des problèmes de calibration et de dérive dans le temps des signaux fournis, dont la correction par des moyens électroniques entraîne des surcoûts significatifs.

De plus, dans le document JP06-141974 A, la température de l'eau oscille ensuite entre la température d'ébullition et la température de maintien au chaud qui est en fait une température minimale. Ces variations de température relativement importantes peuvent être un désagrément pour les utilisateurs.

Un autre appareil similaire est connu du document EP 1518483A.

La présente invention a pour but de palier ces inconvénients de l'art antérieur, notamment en proposant un appareil offrant une fonction de maintien au chaud sans faire appel à des dispositifs complexes et onéreux et tout en offrant un grand degré de fiabilité.

A cet effet, l'invention a pour objet un appareil pour préparation d'eau chaude du type précité, **caractérisé en ce que** le système de commande comprend en outre un contrôleur électronique muni d'un compteur de temps, ledit contrôleur étant apte à interdire l'alimentation du dispositif de chauffage secondaire pendant un temps de latence prédéterminé après la réception du signal d'atteinte de la température maximale prédéterminée pour approcher la température de maintien prédéterminée, puis à alimenter le dispositif de chauffage secondaire de manière continue, la puissance dudit dispositif de chauffage secondaire étant apte à maintenir l'eau proche de la température de maintien prédéterminée.

En imposant un temps de latence à l'aide du contrôleur électronique qui est un composant fiable et bon marché, on obtient un refroidissement de l'eau qui permet d'atteindre approximativement la température de maintien au chaud. Ce temps de latence est déterminé par de multiples essais pour tenir compte des déperditions thermiques à travers le boîtier, mais aussi des conditions d'utilisation relativement variables, non seulement en fonction de la température ambiante, mais aussi des différentes quantités d'eau que l'utilisateur peut choisir de verser dans le récipient. Néanmoins, il est apparu que malgré ces disparités, il est possible de déterminer un temps de latence prédéterminé constant qui permet d'atteindre une température proche de la température de maintien au chaud pour la grande majorité des configurations d'utilisation.

Il s'avère également que ce temps de latence est relativement long, de l'ordre de vingt minutes dans l'exemple de réalisation détaillé ci-après, ce qui procure un très net avantage en termes d'économie d'énergie. En effet, la puissance électrique consommée pendant ce temps de latence est quasi nulle, or il s'avère que ce temps de latence est suffisamment long pour bon nombre de cas d'utilisation où l'utilisateur arrête définitivement l'appareil après s'être servi une ou deux tasses durant cette période. Une économie sensible est réalisée par rapport aux dispositifs antérieurs où une résistance de maintien au chaud est alimentée immédiatement après avoir atteint la température maximale.

La puissance électrique du dispositif de chauffage secondaire est très réduite, de l'ordre de 50 watts pour un dispositif de chauffage principal de l'ordre de 2000 watts. L'alimentation du dispositif de chauffage secondaire ne se fait que lorsque l'eau a atteint sensiblement la température de maintien au chaud, ce qui simplifie grandement les problèmes de régulation autour de cette température. A tel point qu'il s'agit simplement d'alimenter le dispositif secondaire de manière continue, du moins pendant la durée prédéterminée autorisée pour l'opération de maintien au chaud en se passant d'un système de régulation actif.

Dans l'idéal, c'est-à-dire en supposant que les déperditions de la chaleur seraient constantes, par exemple grâce à une isolation importante par le boîtier et du fait d'une quantité d'eau toujours identique, la puissance du dispositif de chauffage secondaire pourrait être parfaitement constante, tout en réalisant un maintien à une température quasi constante très proche de la température de maintien. Néanmoins, pour tenir compte des disparités de conditions d'utilisation, il est préférable que le dispositif de chauffage secondaire comprenne une résistance à coefficient de température, c'est-à-dire dont sa résistance varie en fonction de sa propre température qui, elle-même, dépend de la température de l'eau en contact thermique avec celle-ci. Une résistance à coefficient de température positif (CTP), c'est-à-dire dont la résistance augmente lorsque sa température, et donc celle de l'eau, augmente, a l'avantage de pouvoir être alimentée directement. Mais il n'est pas exclu d'utiliser d'autres types de résistance, par exemple à l'aide d'un montage en pont.

En tout état de cause, l'appareil réalisé selon l'invention permet de s'affranchir d'un détecteur de température supplémentaire ou de l'utilisation d'un capteur de température devant fournir un signal précis et fiable pour au moins deux valeurs de température données. Il est en particulier possible d'utiliser un capteur standard dont la fiabilité est parfaitement éprouvée et qui, jusque là, était réservé à des appareils n'offrant pas de fonction de maintien au chaud.

Dans des modes de réalisation préférés de l'invention, on peut avoir recours en outre à l'une ou l'autre des dispositions supplémentaires suivantes :
- la durée du temps de latence est déterminée en fonction des caractéristiques du boîtier, du dispositif de chauffage principal et des conditions usuelles d'utilisation, de sorte que la température de l'eau ayant atteint la température maximale prédéterminée, soit au plus égale à la température de maintien prédéterminée après ledit temps de latence ; cette disposition permet de garantir que la température de l'eau ne remontera pas à une valeur proche de la température maximale et permet de réduire encore la consommation d'énergie, l'écart plus ou moins important pouvant être compensé par le dispositif de chauffage secondaire, d'autant plus qu'une température plus basse est généralement atteinte du fait d'une moindre quantité d'eau ;
- le boîtier comprend une touche d'activation de la fonction de maintien au chaud et un voyant lumineux signalant l'activation de cette fonction, ce qui offre différents modes d'utilisation pour l'utilisateur, notamment s'il souhaite réaliser des économies d'énergie ;
- la touche d'activation de la fonction de maintien au chaud est reliée au contrôleur électronique, et la fonction de maintien au chaud n'est activée que si la touche est actionnée au cours d'un laps de temps prédéterminé avant ou après la détection de la température maximale prédéterminée, et de préférence au cours d'un laps de temps correspondant au temps de latence prédéterminé ; cette disposition permet d'éviter l'entrée en opération de la fonction de maintien au chaud à partir d'une température trop basse pour que le dispositif de chauffage secondaire permette de se rapprocher de la température de maintien, dépensant ainsi de l'énergie sans offrir de l'eau à une température satisfaisante ;
- la touche d'activation de la fonction de maintien au chaud et un organe de commande de la fonction de chauffage sont tous deux reliés au contrôleur électronique et ledit contrôleur est apte à commander la fonction de maintien au chaud uniquement si l'organe de commande est actionné avant un premier laps de temps prédéterminé après l'actionnement de la touche d'activation, et de préférence avant une minute, ou si la touche d'activation est actionnée avant un deuxième laps de temps prédéterminé après l'actionnement de l'organe de commande, et de préférence égal au temps de latence ; du fait de cette disposition, l'actionnement de la touche d'activation n'entraîne effectivement une fonction de maintien au chaud que si le chauffage jusqu'à la température maximale est commandé sur une période de temps donnée, afin de s'assurer par une simple logique de programmation du contrôleur électronique que le dispositif de chauffage secondaire est activé dans le cadre de la séquence d'utilisation prévue ;
- l'activation effective de la fonction de maintien au chaud entraîne l'allumage d'un premier voyant, et un deuxième voyant est allumé pendant l'opération de maintien au chaud proprement dite ;
- on fournit en outre une base destinée à être reliée à une source de courant électrique et sur laquelle le boîtier est reçu de manière amovible et à connecter électriquement les dispositifs de chauffage et le système de commande, ledit système de commande comprenant des moyens aptes à mémoriser pendant un temps donné l'activation de la fonction de maintien au chaud ; ceci permet d'offrir à l'utilisateur le confort des bouilloires dites sans fil, tout en conservant en mémoire le mode d'utilisation choisi avant le retrait de la base ;
- le détecteur de température est apte à délivrer un signal lorsque l'eau atteint sensiblement une température prédéterminée dite économique comprise entre les températures maximale et de maintien au chaud prédéterminées, et le système de commande comprend un organe de sélection entre la fonction de chauffage à la température maximale prédéterminée et une fonction de chauffage économique jusqu'à la température économique prédéterminée, le signal d'atteinte de température économique étant ensuite considéré comme le signal d'atteinte de la température maximale pour la fonction de maintien au chaud ; ainsi est fourni un mode de fonctionnement encore plus économique en termes d'énergie consommée pour lequel il s'avère que la température obtenue après une période relativement longue, est encore proche de la température de maintien pour bon nombre de conditions d'utilisation ;
- la durée prédéterminée de maintien au chaud est d'une heure, le temps de latence prédéterminé est d'environ vingt minutes, la température maximale prédéterminée est d'environ 100°C, la température de maintien au chaud est d'environ 80°C, et une température d'environ 85°C est prévue pour une éventuelle température économique.

D'autres caractéristiques et avantages apparaîtront au cours de la description qui va suivre, donnée à titre d'exemple non limitatif, en regard des figures dans lesquelles :
- la figure 1 est une figure de côté partiellement arrachée d'un appareil de préparation d'eau chaude selon l'invention ;
- la figure 2 est un schéma électrique simplifié de l'appareil représenté à la figure 1 ;
- les figures 3a et 3b représentent les résultats de deux tests d'utilisation de l'appareil représenté à la figure 1 ;
- la figure 4 est un chronogramme schématique du fonctionnement de l'appareil de la figure 1.

Sur les différentes figures, des références identiques désignent des éléments identiques ou similaires.

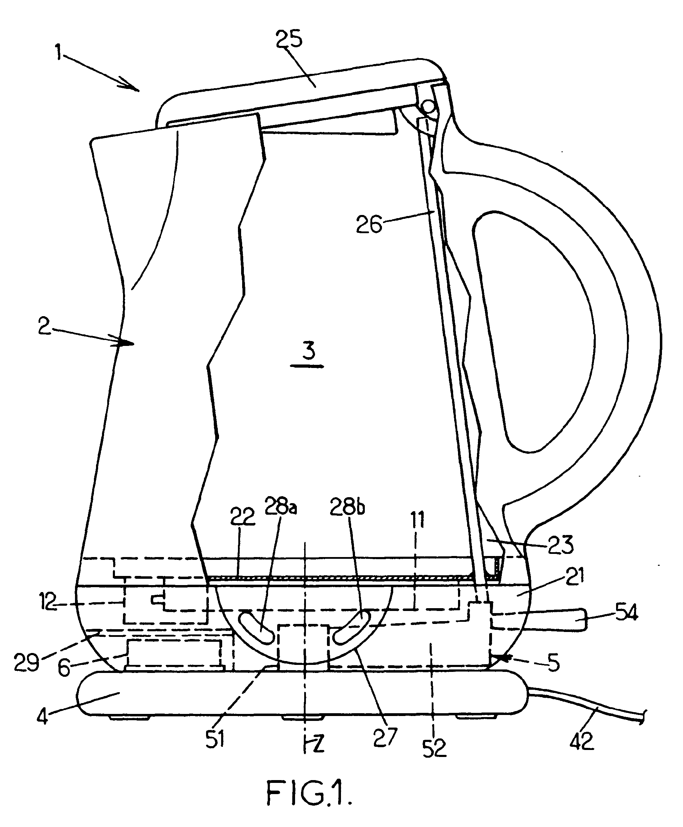

A la figure 1, est représenté un appareil de préparation d'eau chaude 1 de type bouilloire. L'appareil 1 comprend un boîtier 2 définissant un récipient 3 et reposant de manière amovible sur une base 4. Le boîtier 2 comprend en dehors du récipient 3, un bloc de commutation électrique 5 et un contrôleur électronique 6 qui forment l'essentiel d'un système de commande du fonctionnement d'un dispositif de chauffage principal 11 et un dispositif de chauffage secondaire 12.

Plus particulièrement, le boîtier 2 comprend une partie inférieure 21 dans laquelle sont logés les composants électriques et électroniques (5, 6, 11 et 12) surmontés d'un fond chauffant métallique 22. La partie inférieure 21 est prolongée par un corps tubulaire à simple paroi 23 jusqu'à une large ouverture supérieure en majeure partie obturée par un couvercle pivotant 25, lorsque celui-ci est en position d'obturation.

Le récipient 3 comporte un tube vertical 26 ouvert à proximité du couvercle 25 et s'étendant jusqu'au bloc de commutation 5 en passant à travers le fond chauffant 22. Le tube 26 permet de conduire la vapeur produite, en particulier quand le point d'ébullition est atteint, pour déclencher un détecteur de température situé dans le bloc 5 et faisant partie intégrante de celui-ci.

La partie inférieure 21 présente sur sa paroi extérieure une touche d'activation 27 élastiquement enfonçable par l'utilisateur. On comprendra que cette touche pourrait être réalisée fort différemment, non seulement quant à sa forme en demi-cercle, mais aussi quant à son type d'actionnement qui pourrait être de type interrupteur à bascule ou de type touche sensitive.

Un premier et un deuxième voyants lumineux (28a, 28b) sont agencés sur la touche d'activation 27 et sont réalisés à l'aide de LED de couleurs différentes. Comme il apparaîtra de la description de leur fonction, ces voyants pourraient être réalisés et agencés autrement, néanmoins leur position sur la touche d'activation permet de lier plus intuitivement pour l'utilisateur l'indication donnée à la fonction de cette touche d'activation 27.

Dans l'espace intérieur de la partie inférieure 21 du corps 2, on notera la présence d'une cloison 29 disposée entre le contrôleur électronique 6 et les dispositifs de chauffage 11 et 12. Cette cloison 29 permet d'une part de protéger le contrôleur électronique 6 de la chaleur dégagée dans cet espace très confiné, mais aussi de limiter les risques de présence d'humidité au niveau des contacts du contrôleur 6. En effet, dans le type d'appareil considéré, on ne peut pas absolument garantir l'absence de vapeur humide, et c'est d'ailleurs l'une des raisons pour laquelle il est habituellement préféré des moyens de commutation électromécanique de type bilame.

La base 4 se présente de manière parfaitement connue sous forme d'un boîtier circulaire de faible hauteur à partir duquel s'étend un cordon d'alimentation électrique 42. Au centre de la face supérieure de la base 4 et coaxialement à son axe de symétrie Z, est disposé un plot de connexion électrique, non représenté sur la figure, qui permet un positionnement sur 360 degrés du corps 2 par rapport à la base 4.

Le dispositif de chauffage secondaire 12 est, dans le mode de réalisation représenté, une résistance chauffante à coefficient de température positif CTP, c'est-à-dire dont la résistance électrique augmente et la puissance de chauffage diminue, lorsque sa température augmente. A titre indicatif, il s'agit ici d'une résistance CTP d'une puissance de 50 watts sous 220 volts alternatifs lorsqu'elle est à une température de 80°C. Sa puissance varie de quelques watts sur une dizaine de degrés, mais n'atteint jamais une valeur nulle ou quasi nulle. Il est possible d'utiliser d'autres types de résistance pour réaliser le dispositif de chauffage secondaire 12, notamment sous la forme de pont de résistance comprenant une ou plusieurs résistances variables, voire sous forme d'une résistance de valeur quasi constante selon les caractéristiques de l'appareil et de la variabilité des conditions d'utilisation.

Concernant le bloc de commutation électrique 5, il s'agit dans le mode de réalisation représenté, d'un organe standard dont la fiabilité des fonctions réalisées a largement été éprouvée.

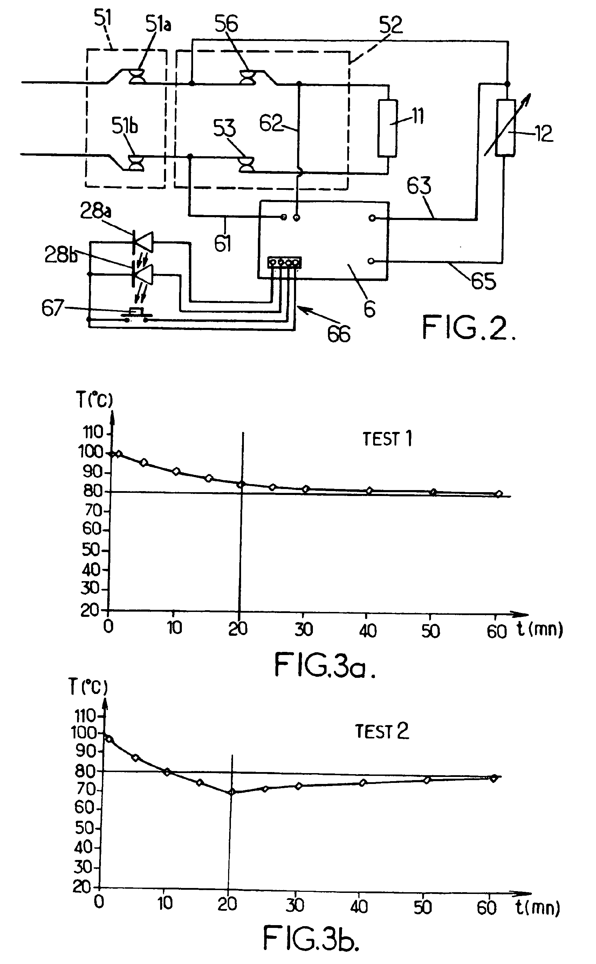

Parmi ces fonctions, il faut noter l'établissement d'une connexion électrique par simple emmanchement avec le plot de la base 4, grâce à une partie globalement cylindrique 51. Cette fonction est symboliquement représentée à la figure 2 par le bloc en pointillé 51 comprenant des contacts de phase et de neutre (51a, 51b) du courant alternatif du réseau de distribution.

La partie adjacente 52 du bloc de commutation 5 comprend un commutateur principal 53 (figure 2) qui sert à commander l'alimentation électrique du dispositif de chauffage principal 11. Ce commutateur principal 53 est basculé en position fermée par l'utilisateur à l'aide de l'organe de commande 54, ici réalisé sous forme d'une pédale dépassant du boîtier 2. Le commutateur principal 53 est ouvert automatiquement lorsque la température de l'eau contenue dans le récipient 3 atteint une température maximale prédéterminée, ici la température d'ébullition, grâce à un dispositif à bilame bien connu soumis à la vapeur conduite par le tube 26.

Néanmoins, la température maximale prédéterminée peut être ajustée à une valeur inférieure à 100°C tout en utilisant un système de bilame sensible à la vapeur. En particulier, il peut être avantageux que le bloc de commutation 5 comporte un double système de bilame pour obtenir une ouverture du commutateur principal 53, et donc un arrêt du chauffage, à une deuxième température inférieure à la température maximale, par exemple à une température appelée température économique de 85°C. Le choix de l'une des températures entre la température maximale et la température économique étant alors effectué par l'utilisateur à l'aide d'un organe de sélection manuel non visible sur les figures.

De manière toujours connue, il est possible de prévoir l'ouverture du commutateur principal 53 par action sur l'organe de commande 54, à savoir en remontant la pédale si l'utilisateur ne souhaite qu'un chauffage partiel.

Le bloc de commutation 5 peut remplir d'autres fonctions et en particulier celui de sécurité thermique. A cet effet, un interrupteur de sécurité 56 (figure 2) en contact thermique avec le fond chauffant 22, passe à l'état ouvert s'il est soumis à une température bien supérieure à 100°C révélatrice d'un chauffage à sec.

Le dispositif de chauffage principal 11 est une résistance blindée en U en contact thermique étroit avec le fond chauffant 22. Mais tout type d'élément chauffant principal connu dans le domaine des bouilloires électriques pourrait être utilisé dans le cadre de la présente invention. La puissance de cet élément chauffant est relativement importante, de 1000 à 2000 watts, voire 3000 watts selon la rapidité de chauffage désiré et les capacités du réseau de distribution électrique.

Afin de réaliser l'invention, le contrôleur électronique 6 comprend un compteur de temps et une électronique capable de déclencher une commande après un temps prédéterminé suivant la détection d'un signal électrique.

Plus précisément, ce contrôleur électronique 6, schématiquement représenté aux figures 1 et 2, est réalisé sous forme d'un circuit imprimé portant un microcontrôleur programmable doté d'une horloge interne et éventuellement d'autres composants électroniques, afin notamment de réaliser une adaptation aux caractéristiques électriques de ses entrées et sorties. En tout état de cause, le contrôleur électronique 6 doit au moins réaliser une commande après un intervalle de temps mémorisé qui est décompté par l'horloge à partir de la réception d'un signal électrique d'entrée. Avantageusement, le microcontrôleur est de plus programmé pour réaliser des commandes conditionnelles à l'aide de plusieurs signaux d'entrée et des intervalles de temps prédéterminés par mémorisation.

Le contrôleur électronique 6 est alimenté électriquement par les lignes 61 et 63 reliées respectivement au neutre et à la phase (51b, 51a) de la source électrique, du moins lorsque le boîtier 2 est correctement positionné sur la base 4 pour établir les contacts (51a, 51b).

La ligne 63 permet, à l'aide de la ligne 62, de déterminer si le commutateur principal 53 est à l'état ouvert ou fermé. Le passage d'un état à l'autre constitue un signal qui est utilisé comme une indication de l'activation de l'organe de commande 54 ou de la détection de la température maximale correspondant soit à l'ébullition de l'eau du récipient 3, soit à une température inférieure prédéterminée.

La ligne 65 permet de mettre en série la résistance CTP du dispositif de chauffage secondaire 12 avec l'alimentation (51a, 51b). Cette mise en série est sélective à l'aide d'un interrupteur secondaire, non représenté, qui peut être intégré au contrôleur 6 étant donné que la résistance secondaire 12 est de faible puissance.

L'ensemble de lignes 66 permet au contrôleur électronique 6, d'une part de commander sélectivement l'allumage des premier et deuxième voyants (28a, 28b) réalisés sous forme de LED, et d'autre part de recevoir du contacteur 67 placé sous la touche d'activation 27, un signal indiquant une demande d'activation de la fonction de maintien au chaud.

Bien entendu, il n'est pas exclu que le contrôleur électronique 6 soit relié à d'autres capteurs ou d'autres voyants.

Le contrôleur électronique 6 est programmé de manière à commander l'alimentation du dispositif de chauffage secondaire 12 uniquement après que se soit écoulé un temps de latence prédéterminé et mémorisé, à partir de la réception d'un signal indiquant que l'eau a atteint la température maximale prédéterminée, ce signal correspondant à l'ouverture du commutateur principal 53 par le thermostat de type bilame du bloc de commutation 5.

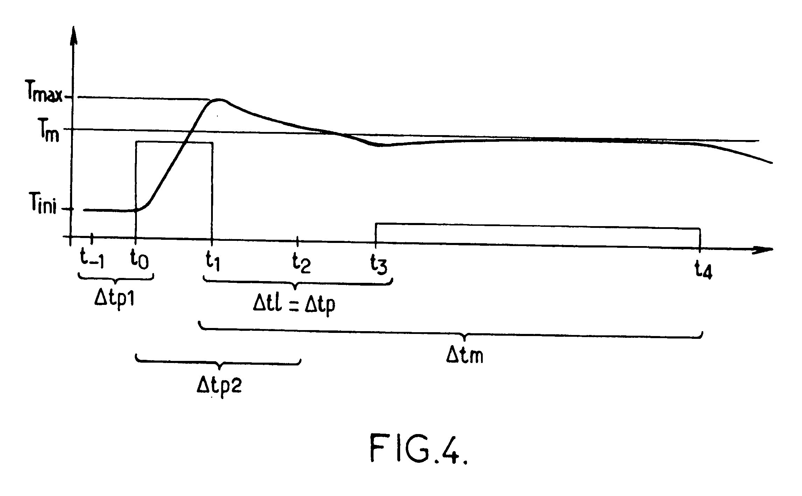

En référence à la figure 4, un cycle de fonctionnement typique se déroule de la manière suivante. Après avoir rempli le récipient 3 avec de l'eau à une température relativement basse Tini, l'utilisateur actionne l'organe de commande 54 à un instant donné indiqué par l'abscisse t0 sur le chronogramme. Le commutateur principal 53 est placé en position fermée et le dispositif de chauffage principal 11 est alimenté, ce qui est symbolisé par l'échelon carré entre t0 et t1. La fermeture du commutateur principal 53 est détectée par les lignes (63, 62). La température de l'eau s'élève jusqu'à atteindre la température maximale prédéterminée Tmax à l'instant t1.

Le dispositif bilame du bloc de commutation 5 commande alors automatiquement l'ouverture du commutateur principal 53, ce qui est également détecté à l'aide des lignes (63, 62). Le contrôleur électronique 6 décompte alors un temps de latence Δt1 introduit en mémoire lors de la fabrication, c'est-à-dire jusqu'à un instant t3 sur le chronogramme. Au cours de ce temps de latence, aucun des dispositifs de chauffage (11, 12) n'est alimenté et la température de l'eau décroît pour atteindre une température proche de la température de maintien au chaud Tm choisie à 80°C dans le mode de réalisation. A partir de l'instant t3, le contrôleur électronique 6 commande l'alimentation du dispositif de chauffage secondaire 12 par l'intermédiaire de la ligne 65. La puissance de chauffage de celui-ci représentée symboliquement par l'échelon plat situé entre t3 et t4, apporte une quantité de chaleur, ajustée ici à environ 50 watts, qui est juste suffisante pour maintenir l'eau à la température de maintien Tm. Il est même possible de compenser un certain écart de la température de l'eau avec la température de maintien Tm à la fin du temps de latence Δt1 grâce à l'utilisation d'une résistance à coefficient de température positif 12 comme le montre le chronogramme.

Le contrôleur 6 continue le décompte du temps à partir de t1pour arrêter l'opération de maintien au chaud, à savoir couper l'alimentation du dispositif de chauffage secondaire 12, après une durée prédéterminée maximale de maintien au chaud indiquée par Δtm entre t1et t4.

Le contrôleur électronique 6 est également programmé pour que la détection d'un nouvel actionnement de la touche d'activation 27 par le contacteur 67 entraîne la coupure de l'alimentation du dispositif de chauffage secondaire 12 entre les intervalles t3 et t4, et plus généralement à tout moment, pour annuler la fonction de maintien au chaud préalablement activée.

Le temps de latence Δt1 doit donc correspondre au temps nécessaire pour que l'eau refroidisse jusqu'à la température de maintien Tm. Ce temps est en fait déterminé à la suite d'essais représentant le plus fidèlement possible les différentes configurations d'utilisation. En effet, le temps de refroidissement dépend non seulement de la température ambiante et de la capacité d'isolation du boîtier, mais dépend aussi de manière importante de la quantité d'eau présente dans le récipient 3. A titre d'exemple, la bouilloire 1 représentée a une capacité de 1,7 1. Un premier test représenté à la figure 3a a été effectué avec 1,5 litre d'eau. Après un temps de latence fixé à 20 minutes, la température est d'environ 85°C. Tandis que le deuxième test représenté à la figure 3b a été effectué avec 0,5 litre d'eau et a fait apparaître une température très légèrement supérieure à 70°C après ce même temps de latence.

Par ailleurs, cette température inférieure dans le cas d'une faible quantité d'eau est rapidement compensée par la suite par le dispositif de chauffage secondaire 12 du fait de la moindre inertie thermique de la faible quantité d'eau. On constate en effet que pour les deux tests, la température après la durée prédéterminée maximale Δ tm de maintien au chaud d'une heure est quasiment égale à la température de maintien Tm. Il s'est avéré que pour un modèle de bouilloire donné, un temps de latence prédéterminé Δt1 unique mémorisé lors de la fabrication, permet d'atteindre la température de maintien Tm avec une remarquable constance pour quasiment toutes les conditions normales d'utilisation.

Pour des raisons d'économie d'énergie, le temps de latence Δt1 est toutefois préférentiellement choisi de manière à ce que la température de l'eau à l'instant t3 soit inférieur, ou au plus égal, à la température de maintien Tm.

Il apparaît donc qu'on obtient une fonction de maintien au chaud avec un nombre limité de composants supplémentaires, dont le coût est faible et le fonctionnement est fiable, à savoir le contrôleur électronique 6 et le dispositif de chauffage secondaire 12 réalisé par une résistance CTP de 50 watts. Les autres composants, en particulier le bloc de commutation 5 et le dispositif de chauffage principal 11 sont parfaitement standard. En tout état de cause, il n'est pas nécessaire d'utiliser un capteur de température délivrant une grandeur électrique représentative de la température mesurée. La consommation d'énergie est réduite du fait de l'imposition d'un temps de latence Δt1. Ceci n'est pas le cas des dispositifs antérieurs utilisant une résistance chauffante de faible puissance, variable ou non, alimentée immédiatement après avoir atteint la température d'ébullition, le refroidissement étant alors particulièrement lent.

On notera aussi que le dispositif de maintien au chaud réalisé par le dispositif de chauffage secondaire 12 et le contrôleur électronique 6 a l'avantage de pouvoir être appliqué à différents types de bouilloire avec un minimum de modifications, puisqu'il s'avère que le paramètre principal à modifier est le temps de latence Δt1 préprogrammé, la puissance de la résistance CTP 12 n'étant modifiée que pour des boîtiers 2 fortement différents.

Dans le cas d'une bouilloire comportant un bloc de commutation 5 et équipé d'un deuxième dispositif bilame déclenché à une température dite économique par exemple de 85°C, le déroulement de l'opération de maintien au chaud est tout à fait similaire si ce n'est que la température de l'eau à la fin d'un temps de latence Δt1 identique est un peu plus inférieure à la température de maintien Tm, mais dans une proportion restreinte du fait de déperditions de chaleur moindre lorsque l'on s'éloigne du point d'ébullition.

D'autres fonctionnalités peuvent être programmées ou prévues à l'aide du contrôleur électronique 6, sans réel surcoût, afin d'augmenter le confort d'utilisation et de limiter encore la consommation d'énergie, en évitant des déclenchements inappropriés du dispositif de chauffage secondaire 12.

A cet effet, le contrôleur électronique 6 est programmé de manière à ce que la fonction de maintien au chaud ne soit effectivement activée, c'est-à-dire que l'alimentation du dispositif de chauffage secondaire 12 soit déclenchée après le temps de latence Δt1, que sous certaines conditions temporelles par rapport à l'instant t0 d'actionnement de l'organe de commande 54 et par rapport à l'instant t1 de détection de la température maximale prédéterminée.

Une première condition est que la touche d'activation 27 doit être actionnée au cours d'un laps de temps prédéterminé Δtp après l'instant t1 de détection de l'ébullition. Ce laps de temps Δtp est au plus égal au temps de latence Δt1 et de préférence égal à celui-ci, afin que le dispositif de chauffage secondaire 12 ne soit pas alimenté pour une température de l'eau qui serait redescendue à une valeur trop basse et à partir de laquelle il serait impossible de se rapprocher à nouveau de la température de maintien au chaud Tm.

Une autre condition est que la fonction de maintien au chaud soit demandée dans un premier intervalle de temps Δ tp1 court (1 minute) avant l'actionnement de l'organe de commande 54 à l'instant t0 et dans un deuxième intervalle de temps Δtp2 limité après l'instant t0. Ceci afin de garantir le plus possible que les signaux reçus par le contrôleur électronique 6 correspondent à une séquence d'utilisation standard au cours de laquelle l'eau atteint la température maximale Tmax. Le deuxième laps de temps prédéterminé Δtp2 est au plus égal au temps de latence Δtl et de préférence égal à celui-ci pour tenir compte du fait que l'intervalle temps (t0-t1) peut être très court si l'eau est déjà chaude.

Afin que l'utilisateur soit informé de la prise en compte effective de la touche d'activation 27 de la fonction de maintien au chaud, le premier voyant 28a n'est allumé que si les conditions ci-dessus ont été effectivement remplies, c'est-à-dire qu'un paramètre du programme du contrôleur électronique 6 est validé et déclenchera le décompte du temps de latence Δt1. Mais, même en l'absence de telles conditions, il reste utile d'informer l'utilisateur par le premier voyant lumineux 28a qu'une opération de maintien au chaud sera effectuée à partir de l'instant t1. Ce premier voyant 28a peut prendre des formes et des couleurs diverses, par exemple en éclairant un pictogramme "maintien au chaud".

Par ailleurs, il reste utile de rappeler l'attention de l'utilisateur lors de l'opération de maintien au chaud proprement dite, c'est-à-dire au moins durant la période de la durée prédéterminée Δtm pendant laquelle le dispositif de chauffage secondaire 12 est alimenté, et de préférence dès l'instant t1. Aussi, il est prévu que le deuxième voyant lumineux 28b soit allumé pendant toute la durée prédéterminée Δtm de maintien au chaud, c'est-à-dire entre les instants t1 et t4, par exemple en émettant une lumière orangée pour attirer l'attention.

Il est bien entendu possible de prévoir un autre voyant, notamment un voyant lumineux de couleur rouge alimenté simultanément avec le dispositif de chauffage principal 11 pour indiquer qu'une opération de chauffage est en cours.

Dans le mode de réalisation présenté, il s'agit d'une bouilloire dite sans fil dont le boîtier 2 est amovible par rapport à la base 4 alimentée électriquement. Afin que l'utilisateur n'ait pas à actionner de nouveau la touche d'activation 27 de la fonction de maintien au chaud après s'être servi, il est avantageux de prévoir dans le système de commande intégré au boîtier 2, des moyens aptes à mémoriser pendant un temps donné, même réduit, l'activation de la fonction de maintien au chaud. Ces moyens de mémorisation, non représentés sur le schéma de la figure 2, peuvent par exemple être réalisés sous forme d'une batterie ou d'un condensateur capable de maintenir l'alimentation du contrôleur électronique 6 pendant quelques minutes.

Le mode de réalisation décrit ci-dessus est bien entendu nullement limitatif et correspond à une application pour laquelle l'avantage de l'utilisation de composants standards et fiabilisés est particulièrement recherchée. Mais l'homme du métier comprendra qu'il est possible d'obtenir des avantages de l'invention avec des détecteurs de température différents de ceux couramment utilisés ou pour d'autres appareils de préparation d'eau chaude que des bouilloires.

## Revendications

1. Appareil de préparation d'eau chaude comprenant :
- un boîtier (2) définissant un récipient (3) destiné à contenir de l'eau à chauffer à une température maximale prédéterminée (Tmax) ;
- un dispositif de chauffage électrique principal (11) adapté pour chauffer l'eau à la température maximale prédéterminée ;
- un dispositif de chauffage électrique secondaire (12) de puissance inférieure au dispositif de chauffage principal ;
- un détecteur de température (5) apte à délivrer un signal lorsque l'eau atteint sensiblement la température maximale prédéterminée ; et
- un système de commande (5, 6) apte à commander une fonction de chauffage jusqu'à la température maximale prédéterminée, puis une fonction de maintien au chaud pendant au moins une durée prédéterminée (Δtm) à l'aide du dispositif de chauffage secondaire (12) et au cours de laquelle l'eau est maintenue proche d'une température de maintien prédéterminée (Tm),
**caractérisé en ce que** le système de commande comprend en outre un contrôleur électronique (6) muni d'un compteur de temps, ledit contrôleur étant apte à interdire l'alimentation du dispositif de chauffage secondaire (12) pendant un temps de latence prédéterminé (Δtl) après la réception du signal d'atteinte de la température maximale prédéterminée (Tmax) pour approcher la température de maintien prédéterminée (Tm), puis à alimenter le dispositif de chauffage secondaire (12) de manière continue, la puissance dudit dispositif de chauffage secondaire étant apte à maintenir l'eau proche de la température de maintien prédéterminée (Tm).

2. Appareil selon la revendication 1, dans lequel le dispositif de chauffage secondaire (12) comprend une résistance à coefficient de température, et de préférence à coefficient de température positif.

3. Appareil selon la revendication 1 ou 2, dans lequel la durée du temps de latence (Δtl) est déterminée en fonction des caractéristiques du boîtier (2), du dispositif de chauffage principal (11) et des conditions usuelles d'utilisation, de sorte que la température de l'eau ayant atteint la température maximale prédéterminée, soit au plus égale à la température de maintien prédéterminée (Tm) après ledit temps de latence (Δtl).

4. Appareil selon l'une quelconque des revendications précédentes, dans lequel le boîtier (2) comprend une touche d'activation (27) de la fonction de maintien au chaud et un voyant lumineux (28a) signalant l'activation de cette fonction.

5. Appareil selon l'une quelconque des revendications précédentes comprenant une touche d'activation (27) de la fonction de maintien au chaud reliée au contrôleur électronique (6), dans lequel la fonction de maintien au chaud n'est activée que si la touche (27) est actionnée au cours d'un laps de temps prédéterminé (Δtp) avant ou après la détection de la température maximale prédéterminée (Tmax), et de préférence au cours d'un laps de temps correspondant au temps de latence prédéterminé (Δtl).

6. Appareil selon l'une quelconque des revendications précédentes comprenant une touche d'activation (27) de la fonction de maintien au chaud et un organe de commande (54) de la fonction de chauffage, tous deux reliés au contrôleur électronique (6), dans lequel ledit contrôleur est apte à commander la fonction de maintien au chaud uniquement si l'organe de commande (54) est actionné avant un premier laps de temps prédéterminé (Δtp1) après l'actionnement de la touche d'activation, et de préférence avant une minute, ou si la touche d'activation (27) est actionnée avant un deuxième laps de temps prédéterminé (Δtp2) après l'actionnement de l'organe de commande, et de préférence égal au temps de latence.

7. Appareil selon l'une quelconque des revendications précédentes, dans lequel l'activation effective de la fonction de maintien au chaud entraîne l'allumage d'un premier voyant (28a), et dans lequel un deuxième voyant (28b) est allumé pendant l'opération de maintien au chaud proprement dite.

8. Appareil selon l'une quelconque des revendications précédentes, dans lequel est fournie en outre une base (4) destinée à être reliée à une source de courant électrique et sur laquelle le boîtier (2) est reçu de manière amovible et à connecter électriquement les dispositifs de chauffage (11, 12) et le système de commande (5, 6), ledit système de commande comprenant des moyens aptes à mémoriser pendant un temps donné l'activation de la fonction de maintien au chaud.

9. Appareil selon l'une quelconque des revendications précédentes, dans lequel le détecteur de température (5) est apte à délivrer un signal lorsque l'eau atteint sensiblement une température prédéterminée dite économique comprise entre les températures maximale et de maintien au chaud prédéterminées (Tmax, Tm), et dans lequel le système de commande (5, 6) comprend un organe de sélection entre la fonction de chauffage à la température maximale prédéterminée (Tmax) et une fonction de chauffage économique jusqu'à la température économique prédéterminée, le signal d'atteinte de température économique étant ensuite considéré comme le signal d'atteinte de la température maximale pour la fonction de maintien au chaud.

10. Appareil selon l'une quelconque des revendications précédentes, dans lequel la durée prédéterminée (Δtm) est d'une heure, le temps de latence prédéterminé (Δtl) est d'environ vingt minutes, la température maximale prédéterminée est d'environ 100°C, la température de maintien au chaud est d'environ 80°C, et une température d'environ 85°C est prévue pour une éventuelle température économique.

## Claims

1. An appliance for preparing hot water including:
- a housing (2) defining a container (3) for containing the water to be heated to a preset maximum temperature (Tmax);
- a main electrical heating device (11) designed to heat water to a preset maximum temperature;
- a secondary electrical heating device (12) with lower power than the main heating device;
- a temperature sensor (5) that can deliver a signal when the water substantially reaches the preset maximum temperature, and
- a Control System (5, 6) that can control a heating function up to the preset maximum temperature, then a keep warm function for at least a preset duration (Atm) by means of the secondary heating device (12) and during which the water is maintained close to a preset keep warm temperature (Tm),
**characterised in that** the Control System includes furthermore an electronic controller (6) fitted with a time meter, said controller being capable of prohibiting power supply to the secondary heating device (12) during a preset lag time (Atl) after reception of the signal of reaching the preset maximum temperature (Tmax) to approach the preset keep warm temperature (Tm), then to supply power continuously to the secondary heating device (12), the power of said secondary heating device being capable of maintaining the water close to the preset keep warm temperature (Tm).

2. An appliance according to claim 1, in which the secondary heating device (12) contains a temperature coefficient resistor, and preferably a positive temperature coefficient resistor.

3. An appliance according to claim 1 or 2, in which the duration of the lag time (Atl) is determined depending on the characteristics of the housing (2), of the main heating device (11) and of the normal operating conditions, such that the water temperature having reached the preset maximum temperature is at the most equal to the preset keep warm temperature (Tm) after said lag time (Atl).

4. An appliance according to any one of the preceding claims, in which the housing (2) contains a keep warm function activation button (27) and a light indicator (28a) signalling the activation of this function.

5. An appliance according to any one of the preceding claims containing a keep warm function activation button (27) connected to the electronic controller (6), in which the keep warm function is activated only if the button (27) is actuated during a preset time interval (Atp) before or after the detection of the preset maximum temperature (Tmax), and preferably during a time interval corresponding to the preset lag time (Atl).

6. An appliance according to any one of the preceding claims containing a keep warm function activation button (27) and a heating function control unit (54), both connected to the electronic controller (6), in which said controller is capable of controlling the keep warm function only if the control unit (54) is actuated before a first preset time interval (Atpl) after actuation of the activation button, and preferably before one minute, or if the activation button (27) is actuated before a second preset time interval (Atp2) after the actuation of the control unit, and preferably equal to the lag time.

7. An appliance according to any one of the preceding claims, in which the effective activation of the keep warm function results in the lighting of a first light indicator (28a), and in which a second light indicator (28b) is lit during the keep warm operation strictly speaking.

8. An appliance according to any one of the preceding claims, in which is a base (4) is additionally provided to be connected to an electric current source and on which the housing (2) is removably accommodated and to electrically connect the heating devices (11, 12) and the Control System (5, 6), said Control system comprising means to memorise for a given time the activation of the keep warm function.

9. An appliance according to any one of the preceding claims, in which the temperature sensor (5) can deliver a signal when the water substantially reaches a so-called preset "economy" temperature ranging between the preset maximum temperature and preset keep warm temperature (Tmax, Tm), and in which the Control system (5, 6) includes a unit to select between the heating function to a preset maximum temperature (Tmax) and an economy heating function up to a preset economy temperature, the signal of reaching the economy temperature being thereafter considered as the signal of reaching the maximum temperature for the keep warm function.

10. An appliance according to any one of the preceding claims, in which the preset duration (Atm) is one hour, the preset lag time (Atl) is about twenty minutes, the preset maximum temperature is about 100 °C, the keep warm temperature is about 80 °C, and a temperature of about 85 °C is provided for a possible economy temperature.

## Patentansprüche

1. Gerät für die Heißwasserzubereitung, umfassend:
- ein Gehäuse (2), das ein Gefäß (3) definiert, das zur Aufnahme von Wasser dient, das auf eine vorausbestimmte Höchsttemperatur (Tmax) erhitzt werden soll;
- eine elektrische Hauptheizvorrichtung (11), die angepasst ist, um Wasser auf die vorausbestimmte Höchsttemperatur zu erhitzen;
- eine elektrische Nebenheizvorrichtung (12) mit einer geringeren Leistung als die Hauptheizvorrichtung;
- einen Temperaturfühler (5), der imstande ist, ein Signal auszugeben, wenn das Wasser im Wesentlichen die vorausbestimmte Höchsttemperatur erreicht, und
- ein Steuersystem (5, 6), das imstande ist, eine Funktion zum Aufheizen bis zur vorausbestimmten Höchsttemperatur sowie eine Funktion zum Warmhalten während wenigstens einer vorausbestimmten Dauer (Δtm) mithilfe der Nebenheizvorrichtung (12) zu steuern, während dieser das Wasser annähernd auf einer vorausbestimmten Warmhaltetemperatur (Tm) gehalten wird,
**dadurch gekennzeichnet, dass** das Steuersystem ferner einen elektronischen Wächter (6) umfasst, der mit einem Zeitzähler ausgestattet ist, wobei der Wächter imstande ist, die Versorgung der Nebenheizvorrichtung (12) während einer vorausbestimmten Latenzzeit (Δtl) nach Empfang des Signals für das Erreichen der vorausbestimmten Höchsttemperatur (Tmax) zu untersagen, um sich der vorausbestimmten Warmhaltetemperatur (Tm) zu nähern, und dann die Nebenheizvorrichtung (12) kontinuierlich zu versorgen, wobei die Leistung der Nebenheizvorrichtung imstande ist, das Wasser annähernd auf der vorausbestimmten Warmhaltetemperatur (Tm) zu halten.

2. Gerät nach Anspruch 1, wobei die Nebenheizvorrichtung (12) einen Widerstand mit Temperaturkoeffizienten, vorzugsweise mit positivem Temperaturkoeffizienten, umfasst.

3. Gerät nach Anspruch 1 oder 2, wobei die Dauer der Latenzzeit (Δtl) in Abhängigkeit von den Eigenschaften des Gehäuses (2), der Hauptheizvorrichtung (11) und den üblichen Benutzungsbedingungen bestimmt wird, so dass die Temperatur des Wassers, das die vorausbestimmte Höchsttemperatur erreicht hat, nach der Latenzzeit (Δtl) möglichst gleich hoch ist wie die vorausbestimmte Warmhaltetemperatur (Tm).

4. Gerät nach einem der vorhergehenden Ansprüche, wobei das Gehäuse (2) eine Aktivierungstaste (27) für die Warmhaltefunktion und eine Kontrollleuchte (28a) zum Anzeigen der Aktivierung dieser Funktion umfasst.

5. Gerät nach einem der vorhergehenden Ansprüche, umfassend eine Aktivierungstaste (27) für die Warmhaltefunktion, die mit dem elektronischen Wächter (6) verbunden ist, wobei die Warmhaltefunktion nur aktiviert wird, wenn die Taste (27) während eines vorausbestimmten Zeitraums (Δtp) vor oder nach Erfassen der vorausbestimmten Höchsttemperatur (Tmax), und vorzugsweise während eines Zeitraums, der der vorausbestimmten Latenzzeit (Δtl) entspricht, betätigt wird.

6. Gerät nach einem der vorhergehenden Ansprüche, umfassend eine Aktivierungstaste (27) für die Warmhaltefunktion und ein Steuerteil (54) für die Heizfunktion, die beide mit dem elektronischen Wächter (6) verbunden sind, wobei der Wächter imstande ist, die Warmhaltefunktion nur dann zu steuern, wenn das Steuerteil (54) vor einer ersten vorausbestimmten Zeitdauer (Δtpl) nach Betätigung der Aktivierungstaste, und vorzugsweise vor einer Minute, betätigt wird, oder wenn die Aktivierungstaste (27) vor einer zweiten vorausbestimmten Zeitdauer (Δtp2) nach Betätigung des Steuerteils, und vorzugsweise gleich wie die Latenzzeit, betätigt wird.

7. Gerät nach einem der vorhergehenden Ansprüche, wobei die effektive Aktivierung der Warmhaltefunktion das Angehen einer ersten Kontrollleuchte (28a) nach sich zieht, und wobei eine zweite Kontrollleuchte (28b) während des eigentlichen Warmhaltevorgangs angeht.

8. Gerät nach einem der vorhergehenden Ansprüche, wobei ferner ein Sockel (4) bereitgestellt wird, der dazu dient, mit einer elektrischen Stromquelle verbunden zu werden, und auf dem das Gehäuse (2) abnehmbar aufgenommen wird, und der die Heizvorrichtungen (11, 12) und das Steuersystem (5, 6) verbinden soll, wobei das Steuersystem Mittel umfasst, die imstande sind, während einer gegebenen Zeitdauer die Aktivierung der Warmhaltefunktion zu speichern.

9. Gerät nach einem der vorhergehenden Ansprüche, wobei der Temperaturfühler (5) imstande ist, ein Signal auszugeben, wenn das Wasser im Wesentlichen eine vorausbestimmte, so genannte Spartemperatur erreicht, die zwischen der vorausbestimmten Höchsttemperatur und der vorausbestimmten Warmhaltetemperatur (Tmax, Tm) liegt, und wobei das Steuersystem (5, 6) ein Teil zum Auswählen zwischen der Funktion zum Aufheizen auf die vorausbestimmte Höchsttemperatur (Tmax) und einer Sparheizfunktion auf die vorausbestimmte Spartemperatur umfasst, wobei das Signal für das Erreichen der Spartemperatur anschließend als Signal für das Erreichen der Höchsttemperatur für die Warmhaltefunktion betrachtet wird.

10. Gerät nach einem der vorhergehenden Ansprüche, wobei die vorausbestimmte Dauer (Δtm) eine Stunde beträgt, die vorausbestimmte Latenzzeit (Δtl) ungefähr zwanzig Minuten beträgt, die vorausbestimmte Höchsttemperatur bei ungefähr 100°C liegt, die Warmhaltetemperatur bei ungefähr 80°C liegt, und eine Temperatur von ungefähr 85°C als eventuelle Spartemperatur vorgesehen ist.
